(19) Europäisches Patentamt
European Patent Office
Office européen des brevets

(11) **EP 1 198 694 B1**

(12) **EUROPÄISCHE PATENTSCHRIFT**

(45) Veröffentlichungstag und Bekanntmachung des Hinweises auf die Patenterteilung:
**30.12.2009  Patentblatt 2009/53**

(21) Anmeldenummer: **01945110.3**

(22) Anmeldetag: **10.05.2001**

(51) Int Cl.:
**G01B 11/02** *(2006.01)*    **G01B 11/25** *(2006.01)*

(86) Internationale Anmeldenummer:
**PCT/EP2001/005336**

(87) Internationale Veröffentlichungsnummer:
**WO 2001/092819 (06.12.2001 Gazette 2001/49)**

(54) **OPTISCHER SENSOR ZUR MESSUNG DES ABSTANDS UND DER NEIGUNG EINER FLÄCHE**

OPTICAL SENSOR FOR MEASURING THE DISTANCE AND INCLINATION OF A SURFACE

DETECTEUR OPTIQUE SERVANT A MESURER LA DISTANCE ET L'INCLINAISON D'UNE SURFACE

(84) Benannte Vertragsstaaten:
**AT BE CH CY DE DK ES FI FR GB GR IE IT LI LU MC NL PT SE TR**

(30) Priorität: **30.05.2000  DE 10026830**

(43) Veröffentlichungstag der Anmeldung:
**24.04.2002  Patentblatt 2002/17**

(73) Patentinhaber: **Carl Zeiss MicroImaging GmbH 07745 Jena (DE)**

(72) Erfinder: **SCHMIDT, Stefan 24159 Kiel (DE)**

(74) Vertreter: **Hampe, Holger
C/o Carl Zeiss AG
Standort Jena
Carl-Zeiss-Promenade 10
07745 Jena (DE)**

(56) Entgegenhaltungen:
**EP-A- 0 145 957    WO-A-88/07657
DE-A- 3 407 074**

- **PATENT ABSTRACTS OF JAPAN vol. 007, no. 290 (P-245), 24. Dezember 1983 (1983-12-24) & JP 58 165007 A (HITACHI SEISAKUSHO KK), 30. September 1983 (1983-09-30)**

**Beschreibung**

Hintergrund der Erfindung:

WO88/07657 beschreibt einen Abstandsmesser oder Profilmesser mit einer linienförmigen Beleuchtung einer Fläche.
In JP01035305 A werden zur Abstandsmessung die Reflexe zweier Lichtstriche auf zwei gekreuzten Detektoren ausgewertet.

Bei vielen Anwendungen kommt es darauf an nicht auf eine Oberfläche sondern auf eine Grenzfläche zu fokussieren. Dies ist immer dann der Fall wenn das Präparat durch ein transparentes Medium geschützt ist oder gehalten wird und durch das transparente Medium hindurch beobachtet werden soll. Beispiele dafür sind das Deckgläschen in der Mikroskopie, das Probenträgerglas wenn die Probe von unten beobachtet werden soll und Probenbehälter wie Mikrotiter-Platten oder Küvetten bei denen das zu untersuchende Präparat am transparenten Boden oder an der Küvettenwand angelagert ist.

Wenn die zu beobachtende Fläche sehr groß ist kommt es nicht nur darauf an die Probe im Zentrum des Sehfeldes zu fokussieren, sondern die zu beobachtende Ebene muß auch bezüglich ihrer Neigung ausgerichtet sein, damit die gesamte Objektebene scharf abgebildet wird.
Die Neigung muß dabei bezüglich der optischen Achse des zur Beobachtung eingesetzten Objektivs ausgerichtet sein, wenn das Objektiv die gesamte beobachtete Fläche erfaßt, oder bezüglich der Ebene in der die Probe verfahren wird wenn die Fläche abgerastert wird, um sie in ihrer Gesamtheit zu erfassen.

In dem der Erfindung zugrunde liegenden Fall handelt es sich um ein Glassubstrat auf dem Moleküle gebunden sind, das für die Beobachtung der Fluoreszenz dieser Molekülen bezüglich eines Objektivs zu fokussieren ist. Da das Sehfeld des Objektivs sehr groß ist und die Schärfentiefe sehr gering, muß das Substrat bezüglich der optischen Achse des Objektivs ausgerichtet sein, damit die gesamte mit Molekülen belegte Fläche in der gleichen Qualität erfaßt werden kann. Die Beobachtung der Fluoreszenz erfolgt durch das Substrat hindurch, so daß nicht die Vorderseite des Substrats fokussiert und ausgerichtet werden muß sondern die mit Molekülen belegte Rückseite.

Der Erfindung liegt also die Aufgabe zugrunde die Neigung und den Abstand der Rückseite eines Glassubstrats zu einer Bezugsebene zu bestimmen.

Die Aufgabe wird durch die Merkmale des Anspruchs 1 gelöst.

Bevorzugte Weiterbildungen sind Gegenatnd der abhängigen Ansprüche.

Der Sensor muß also drei Koordinaten erfassen: Die Fokussierung, das heißt den senkrechten Abstand des Substrats zur Bezugsebene (nominelle Objektebene) in einem bestimmten Punkt und die Neigung um zwei orthogonal zueinander stehende Achsen, die in der Bezugsebene liegen.

Die drei erfaßten Koordinaten dürfen sich dabei nicht gegenseitig beeinflussen. Das heißt eine Neigung des Substrats bezüglich einer der beiden Achsen darf weder die Messung der Neigung bezüglich der anderen Achse noch die Messung des Abstandes beeinflussen. Zumindest muß die Beeinflussung hinreichen gering sein und in der Nähe der optimalen Ausrichtung und Fokussierung des Substrats verschwinden.

Diese Bedingung ergibt sich aus dem Ziel die Probe auf der Basis des Meßergebnisses des Sensors auszurichten. Beeinflußt die Ablage aus der Sollage in einer Koordinate die Meßergebnisse der anderen Koordinaten zu sehr, kann kein konvergierender Algorithmus zum Ausrichten der Probe angegeben werden.

Eine weitere Schwierigkeit besteht bei Substraten mit Keilfehler und nicht exakt definierter Dicke darin, die von Vorder- und Rückseite des Substrats reflektierten Strahlen zu trennen um gezielt die Neigung und Fokussierung einer Seite zu bestimmen. Eine saubere Trennung ist insbesondere dann unumgänglich wenn die betrachtete Grenzfläche eine geringere Reflektivität aufweist. Dieser Fall tritt zu Beispiel ein wenn die Innenfläche einer mit wässriger Lösung gefüllten Küvette ausgerichtet werden soll. Aufgrund des geringeren Brechungsindexsprungs zwischen der Flüssigkeit und dem Glas verglichen mit dem Brechungsindexsprung zwischen Luft und Glas ist die Reflexion an der Innenfläche sehr viel kleiner als die Reflexion an der Außenseite.

Prinzipielle Meßmethode:

Die Neigung wird mit Hilfe eines kollimierten Laserstrahls erfaßt. Der Strahl wird an den Grenzflächen des Substrats reflektiert und die Abweichung des reflektierten Strahls von seiner durch die Sollage definierten Richtung bestimmt.

Der Abstand wird auf der Basis des Triangulationsprinzips ermittelt. Auf den zu vermessenden Punkt ist ein schlankes Lichtbündel, zum Beispiel ein Laserstrahl, gerichtet. Die Beobachtung erfolgt aus einer anderen Richtung als die Beleuchtung. Idealer weise wird aus der Richtung beobachtet, in die der Beleuchtungsstrahl reflektiert wird. Bei nicht streuenden Proben ist dies die Voraussetzung, dafür daß überhaupt Licht beobachtet werden kann. Der Lichtfleck (12) auf der Probe wird durch eine Optik auf einen ortsempfindlichen Detektor (z.B. ein CCD-Array) abgebildet. Wenn die Probe in Richtung der Normalen des Substrats bewegt wird, entfernt sich das Bild des Lichtfleck (12)s auf dem Detektor von seinem durch die Sollage definierten Ort. Der Abstand von der Sollage ist ein Maß für die Verschiebung in Richtung der Oberflächennormalen.

Beschreibung der Erfindung:

Die Erfindung vereinigt einen Neigesensor und einen Triangulationssensor vorteilhaft in einem einzigen Strahlengang.

Da die Neigung nur einer Grenzfläche bestimmt werden soll müssen die reflektierten Strahlen von Vorder- und Rückseite des Substrats getrennt werden.

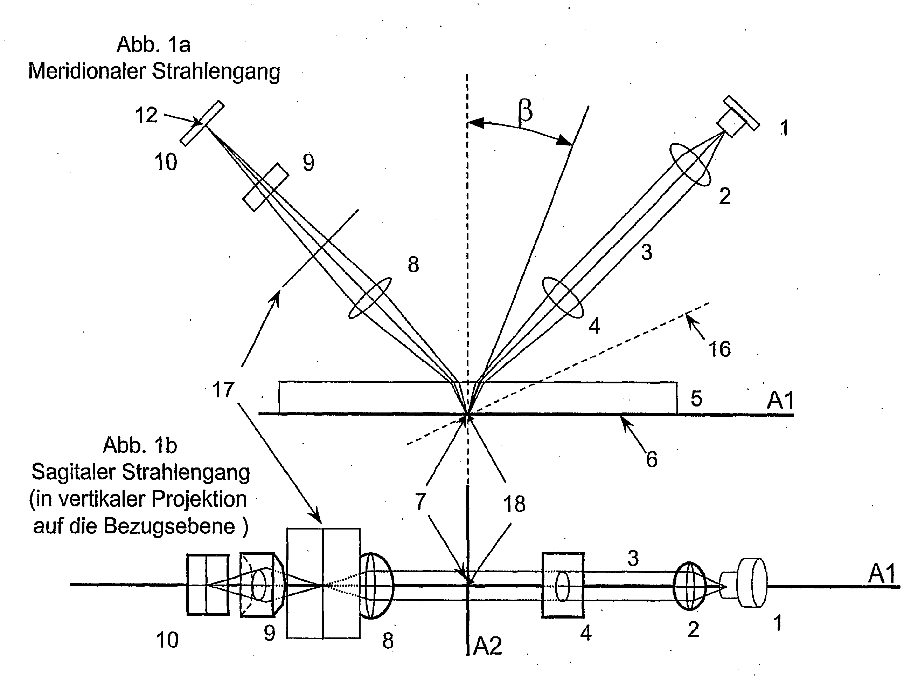

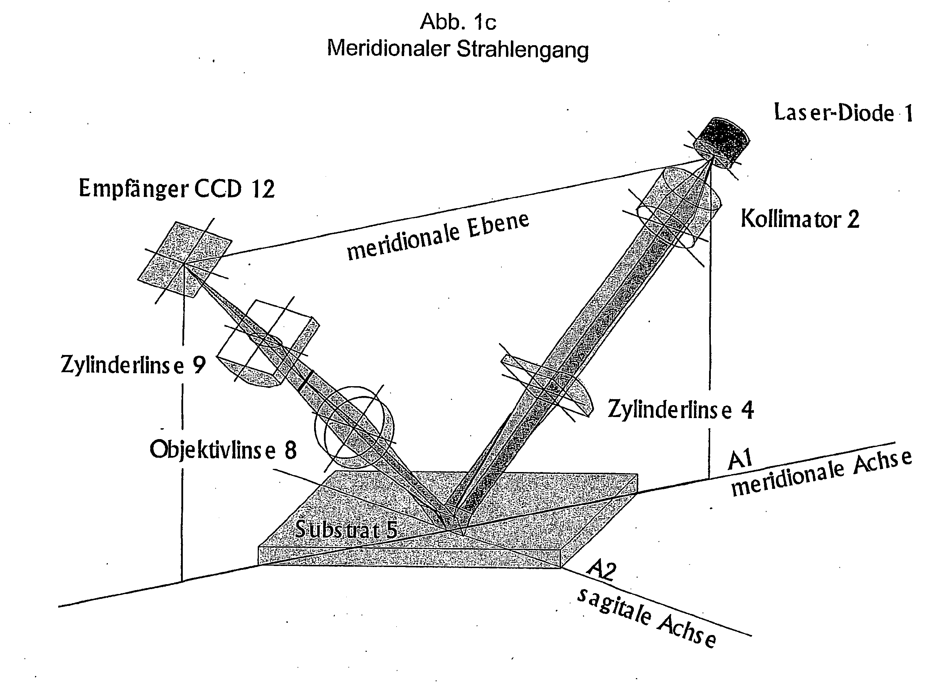

Erfindungsgemäß wird das durch eine anamorphotische Optik gelöst, die den Laserstrahl meridional auf die zu vermessende Fläche fokussiert, während der Strahl sagital kollimiert ist. Die meridionale Ebene ist dabei die Ebene in welcher der Strahlengang des Sensors liegt, und die senkrecht auf der Bezugsebene steht. In den Abbildung 1a, 1b und 1c ist ein Ausführungsbeispiel des erfindungsgemäßen Strahlengangs dargestellt. Dabei ist die Zeichenebene von Abb. 1a die meridionale Ebene und in Abb. 1b ist eine Projektion des erfindungsgemäßen Strahlengangs auf die Bezugsebene dargestellt.

Meridional erfolgt eine Abbildung des Vermessungspunktes (18) in der Bezugsebene (6), in dem Abstand und Neigung bestimmt werden sollen, auf den ortsempfindlichen Detektor (10) (z.B. CCD-Array). Diese Abbildung dient entsprechend dem Triangulationsprinzip zur Bestimmung des Abstandes der zu vermessenden Oberfläche oder Grenzfläche des Substrats (5) von der Bezugsebene (6) im Vermessungspunkt (18).

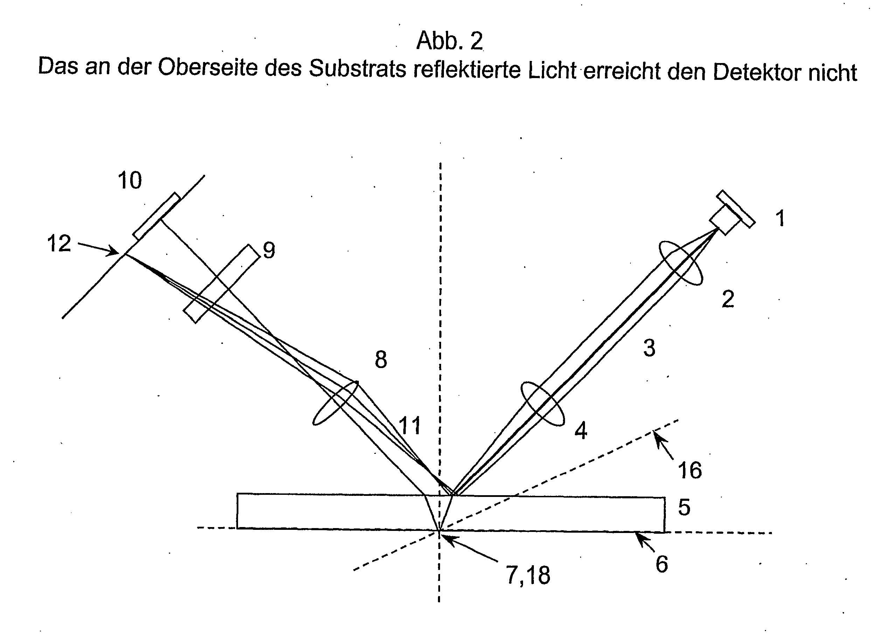

In Abbildung 2 ist die Reflektion des Lichtbündels (11) an der nicht zu vermessenden Vorderseite des Substrats dargestellt. Die Zeichenebene ist wie bei Abb. 1 die meridionale Ebene.

Der an der nicht betrachteten Grenzfläche (Vorderseite) reflektierte Strahl wird nicht auf den Detektor (10) abgebildet, da sich diese Grenzfläche außerhalb des Sehfeldes des Detektors (10) (Fangbereich des Abstandssensors) befindet. Er überlagert den an der betrachteten Grenzfläche reflektierten Strahl also nicht mehr und stört damit weder die Abstandsmessung noch die Bestimmung der Neigung dieser Grenzfläche.

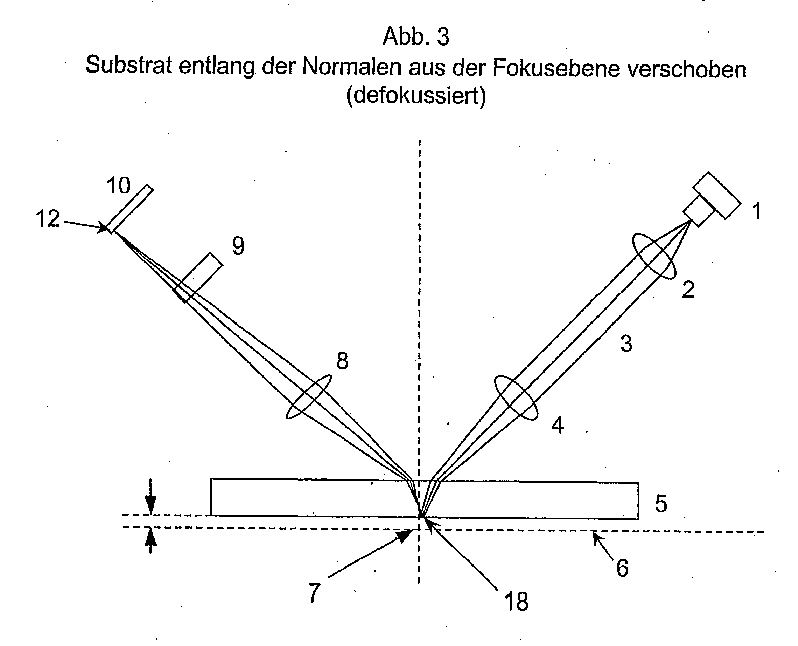

In Abbildung 3 ist das Substrat aus seiner Sollage in Richtung der Normalen auf der Bezugseben (6) verschoben dargestellt. Die Zeichenebene ist wie in Abb. 1 a die meridionale Ebene. Der Strichfokus (7) ist gegenüber dem Vermessungspunkt (18) verschoben und wird durch die Linse (8) nicht mehr auf den durch die Sollage definierten Ort auf dem Detektor abgebildet.

Die Lage des auf dem ortsempfindlichen Detektor (10) erzeugten Lichtflecks (12) gibt also den Abstand des Substrats senkrecht zur Bezugsebene im Vermessungspunkt (18) wieder.

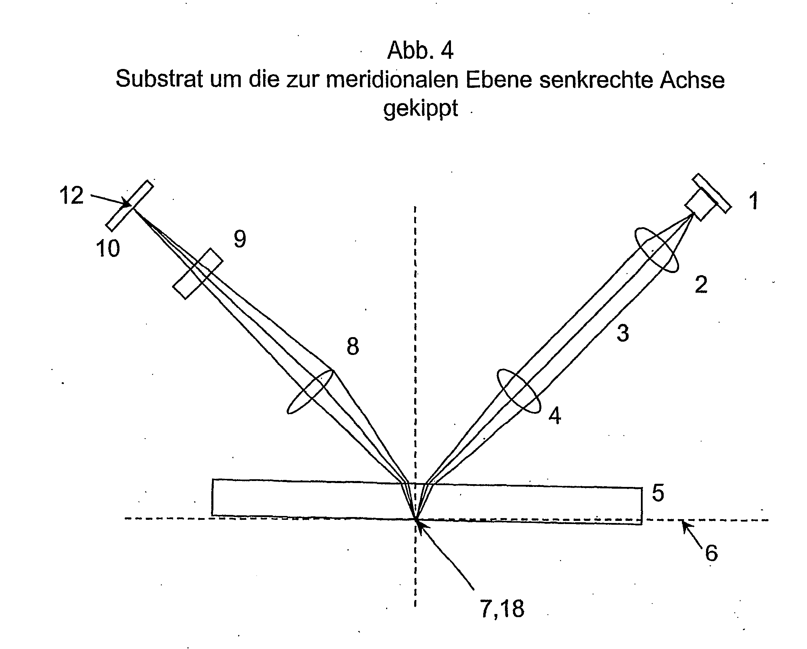

In Abbildung 4 ist die Neigung des Substrats um eine Achse (A2) senkrecht zur Zeichebene, die durch den Vermessungspunkt (18) geht dargestellt. Die Zeichenebene von Abb. 4 ist die meridionale Ebene des Strahlengangs. Da der Strichfokus (7) durch die Neigung des Substrats nicht gegenüber dem Vermessungspunkt (18) verschoben ist befindet sich der Lichtfleck (12) auf dem Detektor (10) in seiner Sollage.

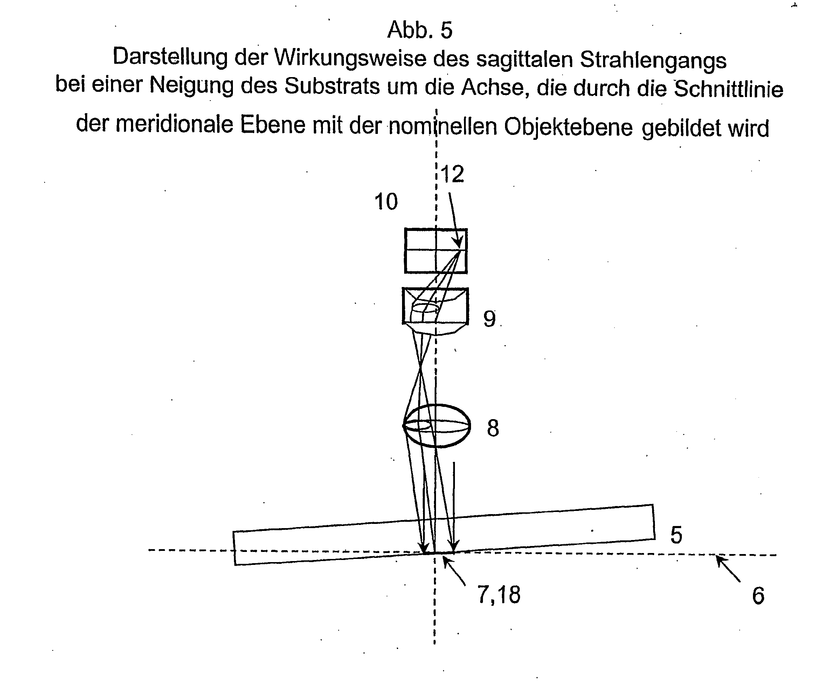

In Abbildung 5 ist eine Projektion des Beobachtungs-Strahlengans auf eine Ebene senkrecht zur der Rotationsachse (A1) dargestellt. Der erfindungsgemäße Strahlengang soll neben dem Abstand der Substratrückseite vom Vermessungspunkt (18) auch die Neigung des Substrats um die in der meridionalen Ebene (Zeichenebene von Abb. 1a,2,3,4) und der Bezugsebene (6) liegende Rotationsachse (A1) messen.

Der von der Substrat Rückseite reflektierte sagital kollimierte Strahl wird durch die Beobachtungsoptik (Linsen 8 und 9) sagital auf den Detektor (10) fokussiert.

Die Lage des Lichtflecks (12) auf dem Detektor gibt also die Strahlrichtung in der sagitalen Ebene wieder, und damit die Neigung des Substrats bezüglich der Rotationsachse (A1) die durch die Schnittlinie der meridionalen Ebene (Zeichenebene von Abb. 1a,2,3,4 ) und der Bezugsebene (6 in Abb 1a, Zeichenbene von Abb. 1b) gebildet wird.

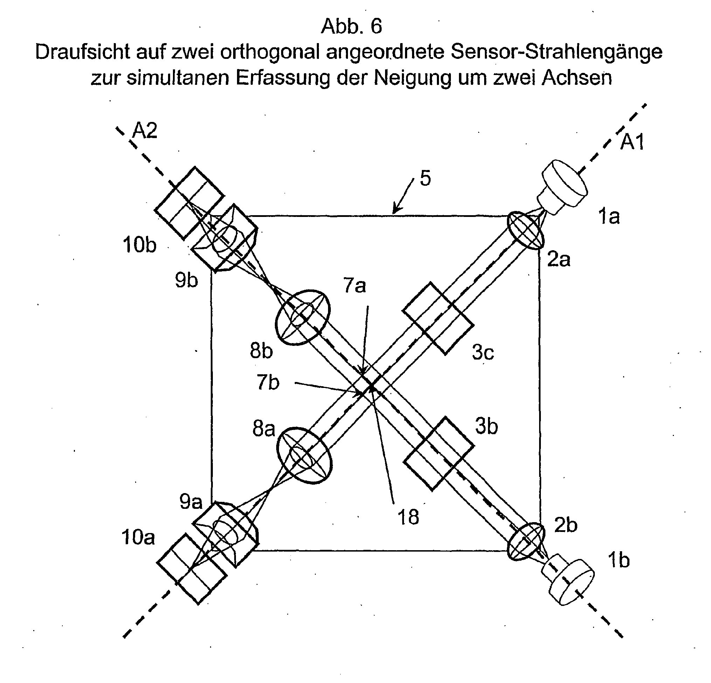

In Abbildung 6 ist die Projektion von zwei Strahlengängen auf die Bezugsebene (6) dargestellt, die im rechten Winkel zueinander angeordnet sind. Um die Neigung um eine zweite zur ersten Achse orthogonalen Achse zu erfassen wird ein zweiter Sensor gleicher Bauart im rechten Winkel zum ersten angeordnet (siehe Abb. 6), so daß sich die Strahlen im Vermessungspunkt (18) in der Bezugsebene (6) treffen.

Ausführungsbeispiel:

In Abbildung 1 ist ein Ausführungsbeispiel für den erfindungsgemäßen Strahlengang dargestellt.

Die von einer Laser-Diode (1) ausgehende Strahlung wird durch eine Linse (2) kollimiert. Der kollimierte Laserstrahl (3) wird in meridionaler Richtung, das heißt in der Zeichenebene von Abbildung 1a, durch eine Zylinderlinse (4) deren Zylinderachse senkrecht zur meridionalen Ebene, also der Zeicheneben von Abb. 1, steht fokussiert. Brennweite und Abstand der Zylinderlinse vom Substrat (5) sind so gewählt, daß der erzeugte Strichfokus (7), in der Bezugsebene (6) liegt, die der Unterseite des Substrats in seiner Sollage entspricht.

Das an der Substratunterseite reflektierte Licht fällt in die Objektivlinse (8). Die Objektivlinse (8) bildet die Sensor-Objektebene (16), die verkippt zur Bezugseben und senkrecht zur meridionalen Ebene (Zeicheben von Abb.1a) liegt, auf einen ortsempfindlichen Detektor (10) (CCD-Array) ab.

Das vom Strichfokus (7), in dessen Mitte sich der zu vermessende Punkt (18) befindet, ausgehende Licht würde also in einen Strich auf dem Detektor (10) überführt.

Da der reflektierte Laserstrahl sagital, also bezüglich der zur Zeichenebene von Abb. 1 senkrechten Richtung, kollimiert ist wird er durch die Objektivlinse in dieser Richtung in die Ebene (17) fokussiert.

In sagitaler Richtung, also bezüglich der zur Zeichenebene von Abb. 1 senkrechten Richtung, wird die Ebene (17) durch die Zylinderlinse (9) deren Zylinderachse in der meridionalen Ebene (Zeichenenben von Abb. 1 a) liegt in die Detektorebene abgebildet.

Durch die oben beschriebene Optik wird erreicht, daß der Abbildungsmaßstab zwischen Sensor-Objektebene (16) und Detektor (10) sowie die sagitale Brennweite der Beobachtungsoptik, bestehend aus den Linsen (8) und (9) den Gegebenheiten angepaßt werden kann.

Das heißt die sagitale Brennweite $f_s$ der Beobachtungsoptik, also die Brennweite bezüglich des Strahlverlaufs senkrecht zur Zeichenebene von Abb. 1, wird so gewählt, daß bei der größten zu erwartenden Neigung des Substrats der Fokus noch auf die Detektorfläche des Detektors (10) fällt.

Für die sagitale Brennweite fs muß also gelten:

$$D_s / f_s \geq \tan(\alpha_{max})$$

Wobei $D_s$ die Kantenlänge des Detektors ist und $\alpha_{max}$ der maximale einer Vermessung zugängliche Neigungswinkel. Als Fangbereich des Neigesensors wird dann der Winkelbereich von +/- $\alpha_{max}$ um die Sollage bezeichnet.

In ähnlicher Weise muß der Abbildungsmaßstab $v_m$ von der Sensor-Objektebene (16) auf den Detektor (10) so gewält werden, daß der auf dem Detektor erzeugt Lichtfleck (12) auch bei maximaler Defokussierung $\alpha_{max}$ noch auf der Detektorfläche liegt. Die maximal zu erfassende Defokussierung in positiver wie negativer Richtung von der Sollage in der Bezugsebene (6) definiert den Fangbereich für den Abstandssensor.

Für den Abbildungsmaßstab in meridionaler Richtung muß gelten:

$$D_m \geq v_m \, \alpha_{max} \sin(2\varphi)/\cos(\varphi)$$

Wobei $D_m$ die Ausdehnung des Detektors in meridionaler Richtung also in der Zeichenebene von Abbildung 1 a ist und $\varphi$ der Einfallswinkel auf die Bezugsebene.

Idealerweise liegen alle weiteren optischen Grenzflächen außerhalb des Fangbereichs, so daß die Reflektionen an diesen Grenzflächen keinen Lichtfleck auf dem Detektor erzeugen und die Messung an der beobachteten Fläche nicht stören.

Insbesondere liegt die Oberfläche des Substrats (5) im Falle des Ausführungsbeispiels außerhalb des Fangbereiches des Abstandssensors und zwar soweit, daß auch bei maximaler Defokussierung des Substrats das an der Oberfläche des Substrats reflektierte Licht nicht auf den Detektor fällt. Es gilt:

$$2\,D_m < v_m \, \alpha_{Substrat} \sin(2\varphi)/\cos(\varphi)$$

Wobei Substrat die Dicke des Substrats (5) ist.

Anstelle der sphärischen Objektivlinse (8) kann auch eine Zylinderlinse eingesetzt werden, deren Zylinderachse senkrecht zur meridionalen Ebene liegt. Unter Umständen kann es sich auch als sinnvoll erweisen die zweite Linse im Beobachtungs-Strahlengang bestehend aus den Linsen (8) und (9) als sphärische Linse auszuführen, wenn die erste als Zylinderlinse ausgeführt ist.

Grundsätzlich kann es sich natürlich als nützlich erweisen Anstelle der Einzellinsen Linsengruppen zur Korrektur von Abbildungsfehlern einzusetzen.

Entscheidend ist, daß es in der meridionalen Ebene zu einer Abbildung der Sensor-Objektebene, in der ein Strichfokus des Laserstrahls erzeugt wird, in die Detektorebene kommt, und gleichzeitig der sagital kollimierte vom Substrat reflektierte Laserstrahl auf die Detektorebene fokussiert wird.

In diesem Fall gibt die Lage des Lichtflecks (12) in der Detektorebene in der zur meridionalen Ebene (Zeichenebene von Abb. 1 a,2,3,4) senkrechten Richtung die Neigung des Substrats um die in der meridionalen Ebene und der Bezugsebene (6) liegende Rotationsachse (A1) wieder. Die Position des Lichtflecks (12) in der Detektorebene in der zu dieser Richtung orthogonalen Richtung gibt die Ablage der betrachteten Substrat-Grenzfläche im Vermessungspunkt (18) normal zur Bezugsebene (6) wieder (siehe Abbildung 3).

Durch die erfindungsgemäße optische Anordnung bleibt die Messung des Abstands von der Bezugsebene weitgehend unbeeinflußt von der Neigung des Substrats. Wie in Abbildung 4 dargestellt hat die Neigung des Substrats um die senkrecht zur meridionalen Ebene (Zeichenebene von Abb 1a,2,3,4) durch den Vermessungspunkt (18) laufende Achse (A2) wegen der Abbildung der Sensor-Objektebene auf die Detektorebene keinen oder zumindest nur geringen Einfluß auf die Position des Lichtflecks in der Detektorebene.

Ebenso hat die Neigung des Substrats um die Achse (A1), die durch die Schnittlinie von meridionaler Ebene (Zeichenebene von Abb 1a,2,3,4) und Bezugsebene (6) gebildet wird, nur Einfluß auf die Position des Lichtflecks (12) senkrecht zur meridionalen Ebene (Zeichenebene von Abb 1a,2,3,4) und im wesentlichen keinen Einfluß auf die Messung des Abstands von der Bezugsebene im Vermessungspunkt.

Die Neigung des Substrats um die zur meridionalen Ebene senkrechte Achse (A2) durch den Vermessungspunkt (18) oder der Abstand des Substrats von der Bezugsebene (6) im Vermessungspunkt (6) haben keinen Einfluß auf die Lage des Lichtflecks (12) senkrecht zur meridionalen Ebene (Zeichenebene von Abb. 1a, 2,3,4).

**Patentansprüche**

1. Optischer Sensor zur Messung des Abstandes und der Neigung einer Fläche, insbesondere relativ zu einer Bezugsebene, wobei

- ein Laserstrahl (1) durch eine erste Linse (2) kollimiert und durch eine erste Zylinderlinse (4) mit einer ersten Zylinderachse in einer ersten Richtung fokussiert wird, wobei auf der Fläche (5) ein Strichfokus entlang der ersten Richtung erzeugt wird, der an der Fläche (5) reflektiert wird, **dadurch gekennzeichnet, daß**
- auf einem ortsempfindlichen Detektor (12) ein Lichtfleck erzeugt wird, indem über eine zweite Linse (8) und eine zweite Zylinderlinse (9) mit einer zweiten Zylinderachse senkrecht zur Längsrichtung des Strichfokus der an der Fläche reflektierte Strichfokus in Richtung der Zylinderachse auf den Detektor (12) abgebildet wird und in einer Richtung senkrecht zur Zylinderachse auf den Detektor (12) fokussiert wird.

**2.** Optischer Sensor nach Anspruch 1, **dadurch gekennzeichnet, daß** der Strichfokus in eine Zwischenbildebene abgebildet wird, in der sich eine Blende befindet deren Größe so auf den Vergrößerungs- oder Verkleinerungsmaßstab der genannten Abbildung abgestimmt ist, daß außer des an der zu vermessenden Oberfläche oder Grenzfläche reflektierten Lichts kein an anderen Oberflächen oder Grenzflächen reflektiertes Licht die Blende passieren kann und so vom Detektor des Sensors fern gehalten wird.

**3.** Optischer Sensor nach einem der Ansprüche 1-2, **dadurch gekennzeichnet, daß** Neigung und/oder Abstand auf einem ein- oder zweidimensionalen ortsempfindlichen Detektor bestimmt werden.

**4.** Optischer Sensor nach einem der Ansprüche 1-3, **dadurch gekennzeichnet, daß** Neigung und/oder Abstand durch das Verhältnis der Signale eines Quadrantendetektors bestimmt wird.

**5.** Kombination mehrerer optischer Sensoren nach einem der Ansprüche 1-4, deren Lichtbündel aus verschiedenen Richtungen auf die Fläche (5) fallen um die Neigung um mehrere Achsen (A1, A2) simultan zu erfassen.

**Claims**

**1.** Optical sensor for measuring the distance and inclination of a surface, in particular relative to a reference plane, in which:

- a laser beam (1) is collimated by a first lens (2) and is focused by a first cylindrical lens (4) with a first cylinder axis in a first direction, a line focus being produced along the first direction on the surface (5) and being reflected on the surface (5), **characterized in that**
- a light spot is produced on a position-sensitive detector (12) by virtue of the fact that a second lens (8) and a second cylindrical lens (9) with a second cylinder axis perpendicular to the longitudinal direction of the line focus are used to image onto the detector (12) the line focus, reflected on the surface, in the direction of the cylinder axis, and to focus it onto the detector (12) in a direction perpendicular to the cylinder axis.

**2.** Optical sensor according to Claim 1, **characterized in that** the line focus is imaged into an intermediate image plane in which there is located an aperture whose size is tuned to the magnification or reduction scale of said image such that apart from the light reflected at the surface or interface to be measured, no light reflected at other surfaces or interfaces can pass through the aperture, and is thus kept remote from the detector of the sensor.

**3.** Optical sensor according to either of Claims 1 and 2, **characterized in that** inclination and/or distance are/is determined on a one- or two-dimensional position-sensitive detector.

**4.** Optical sensor according to one of Claims 1-3, **characterized in that** inclination and/or distance are/is determined by the ratio of the signals of a quadrant detector.

**5.** Combination of a plurality of optical sensors according to one of Claims 1-4, whose light beams fall onto the surface (5) from various directions for the purpose of detecting the inclination around a plurality of axes (A1, A2) simultaneously.

**Revendications**

**1.** Détecteur optique pour mesurer la distance et l'inclinaison d'une surface, notamment par rapport à un plan de référence,

- un rayon laser (1) étant collimaté par une première lentille (2) et étant concentré dans une première direction par une première lentille cylindrique (4) ayant un premier axe de cylindre, un foyer linéaire étant généré sur la surface (5) le long d'une première direction, lequel est réfléchi sur la surface (5), **caractérisé en ce que**
- un point de lumière est généré sur un détecteur à sensibilité de positionnement (12) en représentant le foyer linéaire réfléchi sur la surface sur le détecteur (12) dans la direction de l'axe de cylindre par le biais d'une deuxième lentille (8) et d'une deuxième lentille cylindrique (9) ayant un deuxième axe de cylindre perpendiculaire au sens longitudinal du foyer linéaire, puis concentré sur le détecteur (12) dans une direction perpendiculaire à l'axe de cylindre.

2. Détecteur optique selon la revendication 1, **caractérisé en ce que** le foyer linéaire est représenté dans un plan d'image intermédiaire dans lequel se trouve un obturateur dont la taille est accordée sur l'échelle de grossissement ou de réduction de la représentation mentionnée, de telle sorte qu'aucune lumière réfléchie sur d'autres surfaces ou surfaces de délimitation ne puisse passer à travers l'obturateur à l'exception de la lumière réfléchie sur la surface ou la surface de délimitation à mesurer et est ainsi tenue à distance du capteur du détecteur.

3. Détecteur optique selon l'une des revendications 1 et 2, **caractérisé en ce que** l'inclinaison et/ou la distance sont accordées sur un capteur à sensibilité de positionnement uni ou bidimensionnel.

4. Détecteur optique selon l'une des revendications 1 à 3, **caractérisé en ce que** l'inclinaison et/ou la distance sont accordées par le rapport des signaux d'un capteur à quadrants.

5. Combinaison de plusieurs détecteurs optiques selon l'une des revendications 1 à 4, dont les faisceaux lumineux viennent heurter la surface (5) depuis différentes directions afin de détecter simultanément l'inclinaison autour de plusieurs axes (A1, A2).

Abb. 1a
Meridionaler Strahlengang

Abb. 1b
Sagitaler Strahlengang
(in vertikaler Projektion
auf die Bezugsebene )

EP 1 198 694 B1

Abb. 1c
Meridionaler Strahlengang

Laser-Diode 1

Empfänger CCD 12

Kollimator 2

meridionale Ebene

Zylinderlinse 9

Zylinderlinse 4

Objektivlinse 8

A1
meridionale Achse

Substrat 5

A2
sagitale Achse

EP 1 198 694 B1

## Abb. 2
### Das an der Oberseite des Substrats reflektierte Licht erreicht den Detektor nicht

Abb. 3

Substrat entlang der Normalen aus der Fokusebene verschoben
(defokussiert)

Abb. 4
Substrat um die zur meridionalen Ebene senkrechte Achse
gekippt

## Abb. 5
Darstellung der Wirkungsweise des sagittalen Strahlengangs
bei einer Neigung des Substrats um die Achse, die durch die Schnittlinie
der meridionale Ebene mit der nominellen Objektebene gebildet wird

Abb. 6
Draufsicht auf zwei orthogonal angeordnete Sensor-Strahlengänge
zur simultanen Erfassung der Neigung um zwei Achsen

EP 1 198 694 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8807657 A
- JP 01035305 A